# EUROPEAN PATENT APPLICATION

(11) **EP 4 697 189 A1**
(43) Date of publication of application: **18.02.2026**
(21) Application number: 25193715.7
(22) Date of filing: 04.08.2025
(51) Int. Cl.: G06F 15/167, G06F 12/0815

(54) **COMMUNICATION USING NON-CACHE-COHERENT DISAGGREGATED MEMORY**

(30) Priority: 15.08.2024 US 202418806558
(71) Applicant: VMware LLC, Palo Alto, CA 94304 (US)
(72) Inventor: Amaro Ramirez, Emmanuel, Hayward, CA, 94544 (US); Aguilera, Marcos Kawazoe, Cupertino, CA, 95014 (US); Sur, Debnil, Irvine, CA, 92603 (US)
(74) Representative: Grünecker Patent- und Rechtsanwälte PartG mbB

(57) **Abstract**

Processor-to-processor communication is provided by using a non-cache-coherent disaggregated memory. The communication between a first processor and a second processor uses a pipe with three circular buffers (rings): a first ring at a first memory of a first computer that includes the first processor, a second ring at a second memory of a second computer that includes the second processor, and a third (shared) ring at the disaggregated memory that is shared by the first and second processors. The first processor uses the pipe to write a descriptor (containing the data and an ownership value) to the shared ring, and the second processor performs a polling process to determine if the ownership value corresponds to the second processor so that the second processor can act on (e.g., copy and modify) the data in the descriptor.

## Description

### BACKGROUND

Disaggregated memory is a technology that enables one or more central processing units (CPUs) of computers such as hosts to access memory that is located outside of (e.g., remote from or external to) the physical enclosure of the hosts. For example, a CPU, local memory, other hardware, software, and various other components of a computer may be contained within a physical enclosure (e.g., a housing) of the computer. A plurality of such computers may be placed in some corresponding slots of a rack arrangement (e.g., a frame/cabinet that provides the slots). Additional memory (e.g., disaggregated memory) may be placed in other slots of the rack arrangement, for use by one or more of computers in other slots of the same or adjacent rack arrangement(s). The rack arrangements may in turn be located in a data center, server cluster, server farm, etc. disposed in a physical room, building, or other type of facility at a geographic location. In this manner, local memory of the CPUs may be augmented by external memory (e.g., the disaggregated memory). This external memory may be provided by one or more memory pools connected to the hosts through a fast fabric. Among other advantages, disaggregated memory addresses the need of data-intensive workloads to maintain increasingly large state in memory.

Cache coherence generally refers to the consistency and synchronization of data stored in different caches in a computing system where there are multiple CPUs (e.g., processors, cores, etc.) and a shared memory (e.g., main memory). Each CPU typically has its own local cache(s) that stores data copied from the shared memory. Because each CPU has its own cache and operates on the data stored in that cache, different caches could potentially have different versions of the data. For example, if a copy of the data stored in the cache of one CPU is changed/updated, all other copies of the data in the other CPUs' caches should also be correspondingly changed/updated for consistency purposes. Cache coherence protocols attempt to ensure that changes/updates made for one copy are propagated to the shared memory and/or to all other cached copies in a timely manner.

It is possible that if the number of hosts connected to disaggregated memory is large (e.g., more than 8 or 16 CPUs), the disaggregated memory will not have cache coherence, since distributed cache coherent traffic is unlikely to scale. Accordingly, in order for hosts to use disaggregated memory for communication with each other without corrupting data, the hosts would need to take turns when writing to a memory location in the disaggregated memory and would also need to more frequently flush dirty data (e.g., data modified in the cache but not yet in memory) from their caches (e.g., a cache flush), which is costly.

Yet, it is unclear as to how CPUs may coordinate taking turns when there is no cache coherence. One option is to use messages via an out-band-fabric like a network or other alternate/dedicated communication link(s) usable for conveying management and/or control instructions and related information (or other types of instructions/information). The messages are used to elect a particular CPU that may write to the disaggregated memory and/or to provide notification to the CPUs that the particular CPU is taking its turn to write to the disaggregated memory, thereby preventing multiple concurrent writes to the same memory location in the disaggregated memory. However, using a large number of such messages via the network causes network performance (e.g., latency, reduced bandwidth, outages, or other network issues) to adversely affect the flow of communication over disaggregated memory.

### SUMMARY

In an embodiment, a computing system comprises a first computer that includes a first processor and a first memory having a first buffer; a second computer that includes a second processor and a second memory having a second buffer; and a third memory, having a third buffer, that is external to and shared by the first and second computers, wherein the first and second computers are configured to communicate with each other via the third memory, and wherein: the first processor is configured to write data into the first buffer in the first memory and to set an ownership associated with the data to correspond to the second processor; the first processor is configured to write the data from the first buffer in the first memory to the third buffer in the third memory; and the second processor is configured to perform a polling process to determine the ownership of the data, and in response to the polling process having determined that the ownership corresponds to the second processor, the second processor is configured to copy the data from the third buffer in the third memory to the second buffer in the second memory.

In an embodiment, a method for a first computer having a first processor and a first memory to communicate with a second computer having a second processor and a second memory comprises: writing, by the first processor, data into a first buffer in the first memory and setting an ownership associated with the data to correspond to the second processor; sending, by the first computer, a message to the second computer to inform the second processor that the first processor will write to a third buffer in a third memory, wherein the third memory is external to and shared by the first and second computers, and wherein in response to the message, the second processor starts a polling process to determine the ownership; and writing, by the first processor, the data from the first buffer in the first memory to a third buffer in a third memory, wherein in response to a polling process having determined that the ownership corresponds to the second processor, the second processor is configured to copy the data from the third buffer in the third memory to the second buffer in the second memory.

In an embodiment, in a computing system that includes a first computer having a first processor and a first memory and a second computer having a second processor and a second memory, a method for the second computer to communicate with the first computer comprises: receiving, by the second computer from the first computer, a message to inform the second processor that the first processor will write data to a third buffer in a third memory, wherein the third memory is external to and shared by the first and second computers; in response to the message, performing, by the second processor, a polling process to determine ownership of the data; in response to the polling process having determined that the ownership corresponds to the second processor, copying, by the second processor, the data from the third buffer in the third memory to the second buffer in the second memory; and generating, by the second processor, a reply by modifying the data in the second buffer in the second memory and writing the modified data from the second buffer in the second memory to the third buffer in the third memory, wherein the first processor performs another polling process to determine ownership of the modified data, and wherein in response to the another polling process having determined that the ownership of the modified data corresponds to the first processor, the first processor copies the modified data from the third buffer in the third memory to the first buffer in the first memory.

### BRIEF DESCRIPTION OF THE DRAWINGS

Fig. 1 is a block diagram depicting an example computing system according to embodiments.
Fig. 2 is a block diagram depicting an example of computers that use disaggregated memory according to embodiments.
Fig. 3 is a block diagram depicting an example rack arrangement having disaggregated memory according to embodiments.
Fig. 4 is a block diagram depicting an example of computers that can communicate with each other using a disaggregated memory and circular buffers according to embodiments.
Fig. 5 is a diagram of an example descriptor that may be used for the circular buffers of Fig, 4 according to embodiments.
Figs. 6-9 are sequential functional block diagrams depicting a communication protocol between computers using a disaggregated memory according to embodiments.
Fig. 10 is a flow diagram depicting a method of communication between computers using disaggregated memory according to embodiments.

### DETAILED DESCRIPTION

The embodiments disclosed herein use disaggregated memory for communication between processors of computers, without needing to use an expensive, complex, and sometimes unworkable or unscalable cache coherence protocol. That is, the embodiments use disaggregated memory without requiring cache coherence and with reduced out-of-band messaging via a network, so as to provide a more scalable and workable/efficient implementation. For example, out-of-band messages may include messages sent over a network or other alternate/dedicated communication link(s) usable for conveying management and/or control instructions and related information (or other types of instructions/information), such as information as to which processor has its turn to write to the disaggregated memory. Since network issues such as latency, reduced bandwidth, outages, etc. may adversely affect messaging via the network, reducing the number of messages communicated via the network operate to reduce the adverse effects of such network issues on the communication between processors over disaggregated memory.

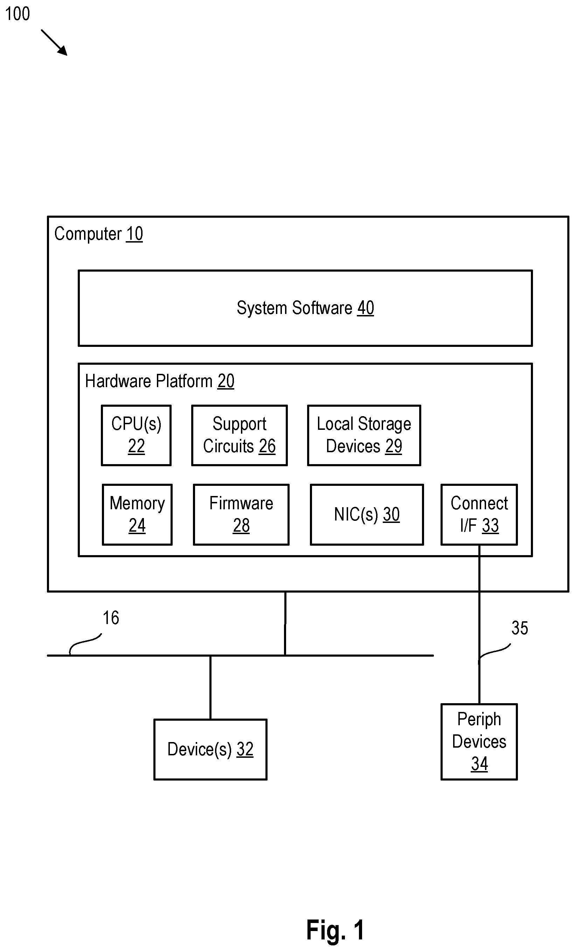

Fig. 1 is a block diagram depicting an example computing system 100 according to embodiments. The computing system 100 may include one or more computers 10, such as a host, a server, etc. as examples. The computer 10 may comprise system software 40 executing on a hardware platform 20. The hardware platform 20 may include components of a computing device, such as one or more processors (e.g., central processing units (CPUs) 22), memory 24 such as one or more of host memory (e.g., random access memory (RAM)) and/or other type of memory or parts thereof (e.g., caches, buffers, etc.), one or more network interface controllers (NICs) 30, firmware 28, support circuits 26, and local storage devices 29. For example, a buffer described herein may be a region of memory used to temporarily hold data or other type of data storage area. The CPUs 22 may be configured to execute instructions, for example, executable instructions that perform one or more operations described herein, which may be stored in the memory 24. The NICs 30 enable the computer 10 to communicate with other devices using network protocols (e.g., Ethernet, Transmission Control Protocol/Internet Protocol (TCP/IP), etc.). The NIC(s) 30 can be connected to a network switch over a network 16. The network 16 may include cabling, backplane interconnections, and the like for connecting devices, such as for connecting the computer 10 to one or more devices 32. The devices 32 can include another computer 10, external memory (including disaggregated memory in some embodiments), external storage, a switch or router, a bridge, and so forth. In some embodiments, the network 16 can include a wireless link.

The local storage devices 29 may include magnetic disks, solid-state disks, flash memory, and the like as well as combinations thereof. The support circuits 26 include various circuits that facilitate operation of the hardware platform 20, such as power supplies, chipsets, input/output (IO) circuits, and the like. The firmware 28 may include instructions and configuration data for configuring the hardware platform 20 upon power on until handing off execution to the system software 40.

The hardware platform 20 may further include a connection interface 33 (which can include one or more of cabling, a bus, a port, a bridge, a terminal, or other interconnection components) to enable connection of the computer 10 with peripheral devices 34. The peripheral devices 34 may be connected to the CPU(s) 22 and the memory 24 through the connection interface 33. The peripheral devices 34 can be disposed within the computer 10 or disposed externally to the computer 10 (such as depicted in Fig. 1) via a connection link 35, and can include graphics processing units (GPUs), hardware accelerators, storage devices, disaggregated memory, and other devices (including other computers 10). In some embodiments, the connection link 35 can be part of the network 16 or separate from the network 16. The connection link 35 can include cabling, backplane interconnections, and the like (as well a wireless link in some embodiments) for connecting devices, and can generally be referred to as a fabric (or portion thereof) in some contexts. Although shown separately, the NICs 30 can be included as part of the connection interface 33, and the peripheral devices 34 can be included amongst the devices 32, in some embodiments.

In embodiments, the connection interface 33 and the connection link 35 may be compliant with a Peripheral Component Interconnect (PCI) Express^{®} (PCIe) specification. In embodiments, the connection interface 33 and the connection link 35 may be further compliant with a Compute Express Link^{™} (CXL) specification. CXL is an open standard for high-speed CPU-to-device and CPU-to-memory interconnect aimed at high-performance computing environments. CXL is designed to improve the performance of data centers and servers by enabling faster and more efficient data transfer between the CPU, memory, and various devices, such as accelerators, GPUs, network cards, and storage devices. CXL is built on top of the PCIe infrastructure, leveraging the PCIe physical and electrical interface standards, which allows CXL to maintain compatibility with existing PCIe devices and ecosystems.

In some embodiments in which the peripheral devices 34 include disaggregated memory, the connection between the CPUs 22 and the disaggregated memory may be provided by the connection interface 33 and the connection link 35 that are based on the CXL/PCIe or analogous technology. In other embodiments, other technologies different from CXL/PCIe may be used to provide the connection, including wireless in some implementations.

For the sake of simplicity and brevity, other components that can comprise parts of the connection link 35 are not shown or described in further detail herein. Such other components can include one or more of an interconnect switch (such as a CXL switch), a controller, a fabric manager, and so forth.

The system software 40 can include a host operating system (OS). In some embodiments, the system software 40 can include a hypervisor. A hypervisor abstracts processor, memory, storage, and network resources of hardware platform 20 to provide a virtual machine execution space within which multiple virtual machines (VMs) may be concurrently instantiated and executed. The system software 40 according to various embodiments can also include applications, tools, engines, etc. that serve various purposes.

As an example, the computing system 100 may include virtualized computing instances such as VMs, containers (e.g., running on top of a host operating system without the need for a hypervisor or separate operating system; or implemented as an operating system level virtualization), virtual private servers, client computers, etc. The virtualized computing instances may also be complete computation environments, containing virtual equivalents of the hardware and system software components of a physical computing system. Hence, the computer(s) 10 and its components described herein may be implemented in some embodiments by virtual computing instances such as VMs, and these virtualized computing instances can communicate with each over via disaggregated memory using the techniques described herein.

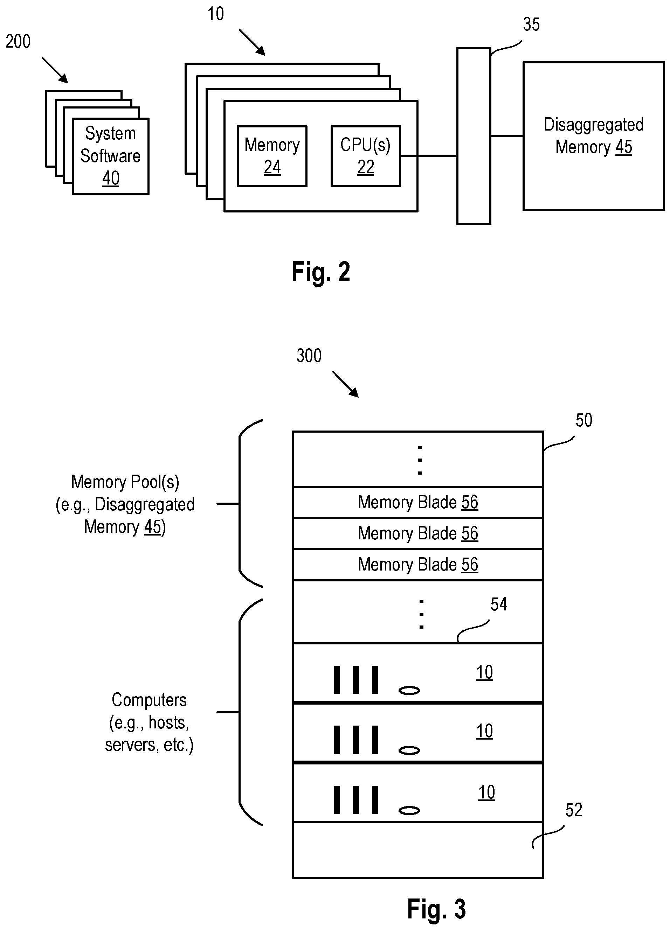

Fig. 2 is a block diagram depicting an example of computers that use disaggregated memory according to embodiments. Such computers may include, for example, a plurality of the computers 10 of Fig. 1, each having a respective CPU 22 and memory 24. One or more software stacks 200 include the system software 40 corresponding to each of the computers 10, as well as applications and/or other computer-readable instructions stored on a tangible computer-readable medium and executable by one or more processors.

Through a backplane or other fabric (such as the connection link 35), each of the CPUs 22 are able to communicate with and access a disaggregated memory 45, which may be shared memory in some embodiments. Access (such as reading/writing) may be performed, for example, via load and store operations, direct memory access (DMA) or remote DMA (RDMA) operations, or other suitable memory access operations. The disaggregated memory 45 may include one or more pools of memory. The disaggregated memory 45 of various embodiments may be considered to be non-cache-coherent in that a cache coherence protocol is not used to provide data consistency for copies of data that are stored in the memories 24 of the CPUs 22. It is noted that in some embodiments, the various techniques disclosed herein may be implement in a computing system or other arrangement of processors and memories wherein the disaggregated memory 45 uses or otherwise operates in conjunction with a cache coherence protocol.

In some embodiments, the disaggregated memory 45 may be implemented as memory blades. Each memory blade can in turn include one or more of a memory controller, memory mapping table, bridge, application integrated circuit (ASIC), multiple memory devices such as dual in-line memory modules (DIMMS) or other memory devices, and so forth. The CPUs 22 and corresponding memories 24 may be implemented as compute blades or server blades and the like. In multicore or multiprocessor implementations, a plurality of CPUs and respective memories may be disposed on individual compute blades.

Fig. 3 is a block diagram depicting an example rack arrangement 300 having disaggregated memory (e.g., the disaggregated memory 45) according to embodiments. The rack arrangement 300 (or sometimes referred to more simply as a rack) may include a frame 50 that provides a plurality of slots or units 52. Some of the units 52 may hold a corresponding plurality of the computers 10 (e.g., hosts, servers, etc.), the components (e.g., CPU 22, memory 24, etc.) of which may be contained within an enclosure 54 fitted in each respective unit 52. Some of the other units 52 may hold one or more memory blades 56 that form at least one memory pool, and such memory pool(s) provide the disaggregated memory 45. For simplicity purposes, a backplane, specific connections, various components (e.g., a power unit, CXL switch, manager, etc.) that may be held in other units 52 of the frame 50, and other electrical or mechanical parts are not shown in Fig. 3.

According to various embodiments, the hosts (e.g., the CPUs 22 of the computers 10) within the same rack arrangement 300 (and/or at different rack arrangements 300) can communicate data with each other using the disaggregated memory 45 and a suitable fabric (such as via CXL provided by the connection link 35).

Further details are now provided regarding communication between computers (e.g., server-to-server communication), using a shared and non-cache-coherent disaggregated memory. According to embodiments, the communications are based on the use of: a communication link, which can be analogized with a pipe, provided between two computers (e.g., a producer and a consumer) via a disaggregated memory; three circular buffers or rings of the pipe; and descriptors associated with the rings. As will be described in further detail later below, the pipe provides a single-producer single-consumer communication protocol. The pipe allows the producer to send payloads of data to the consumer, and the consumer can issue replies to every received payload. According to various embodiments, the pipe may be an in-order communication link: payloads are received by the consumer in the order submitted by the producer, and replies from the consumer are issued in the order in which the payloads are received.

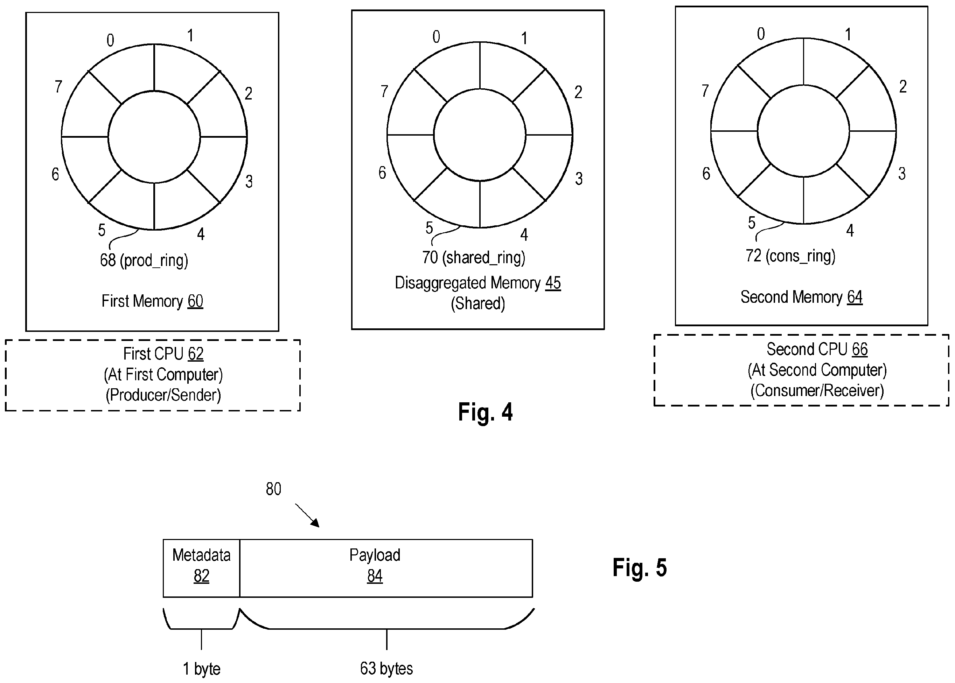

Fig. 4 is a block diagram depicting an example of computers that can communicate with each other using a disaggregated memory and circular buffers (rings) according to embodiments. At a first computer (e.g., a host or server), a first memory 60 is locally used by or otherwise coupled to a first CPU 62. At a second computer (e.g., another host or server), a second memory 64 is locally used by or otherwise coupled to a second CPU 66. The first and second computers of Fig. 4 may each be substantially similar to the computer 10 shown and described previously above with respect to Figs. 1-3. Analogously, the first CPU 62 and the second CPU 66 may each be substantially similar to the CPU 22 shown and described previously above with respect to Figs. 1-3, and the first memory 60 and the second memory 64 may each be substantially similar to the memory 24 shown and described previously above with respect to Figs. 1-3.

According to various embodiments, one or more circular buffers may be configured in each of the first memory 60, the disaggregated memory 45, and the second memory 64. A circular buffer (which is sometimes referred to as a circular queue, cyclic buffer, ring buffer, or other analogous terminology), and which will be referred to at times herein as a ring, is generally an array or other type of data structure that behaves as if it has a circular shape-the last element of the buffer is connected to the first element of the buffer. A circular buffer may be of fixed size (e.g., a fixed number of units in the buffer), where a head pointer provides an index to a unit in the buffer where data is written, and a tail pointer provides an index to a unit in the buffer where data is read. When the buffer becomes full (in some buffer implementations), subsequent data is written over the oldest data at the beginning position/unit in the buffer (e.g., a first in, first out buffer arrangement).

According to various embodiments and with regards to circular buffers, the first CPU 62 may be referred to as a producer or sender or requestor, while the second CPU 66 may be referred to as a consumer or receiver or responder. It can be appreciated that such terminology are merely examples, and depending on the context of the data communication and/or CPU instructions, the second CPU 66 may be the producer or sender or requestor, while the first CPU 62 may be the consumer or receiver or responder.

According to various embodiments, the pipe may be implemented with the three rings shown in Fig. 4: a first ring 68 (prod_ring) configured in the first memory 60, a shared ring 70 (shared_ring) configured in the disaggregated memory 45, and a second ring 72 (cons_ring) configured in the second memory 64. By way of example and illustration, these three rings 68-72 each have 8 buffer elements (units) where data may be written/read, with such 8 units being labeled 0-7 in Fig. 4. Also by way of example, the size of each unit may be 64 bytes, so as to correspond to or otherwise accommodate the size of a single cache line of some embodiments. A cache line may represent a size of a block of memory. For example and with respect to a cache line of 64 bytes, a memory may be divided in distinct (non-overlapping) blocks of memory each being 64 bytes in size. The three rings 68-72 may be structurally similar/identical to each other in various embodiments.

The first ring 68 (prod_ring) and the second ring 72 (cons_ring) allow the producer and consumer to respectively write to the shared ring 70 (shared_ring, or third ring) using 64-byte writes. That is, the first ring 68 (prod_ring) and the second ring 72 (cons_ring) are the sources of data for writes to the shared ring 70 (shared_ring). Moreover, the producer and consumer maintain head and tail pointers for their respective ring, and these pointers may be accessed locally by the respective CPU.

Fig. 5 is a diagram of an example descriptor 80 that may be used for the circular buffers 68-72 of Fig, 4 according to embodiments. A descriptor of various embodiments may be a structure or other arrangement of data at each individual unit of the rings 68-72. In the example of Fig. 5, the descriptor 80 may include two portions: metadata 82 and a payload 84. The size of the descriptor 80 may be, for example, 64 bytes (corresponding to a single cache line): 1 byte for the metadata 82 and 63 bytes for the payload 84.

The pipe of various embodiments uses descriptor ownership to determine who can act on a descriptor 80 at any given time. The owner can be a producer or a consumer. A first bit in the 1 byte of the metadata 82 may be configured as an ownership bit. The value of that bit (bit value) indicates which of the producer or the consumer owns the descriptor 80 (and hence owns the data in the payload 84). For example, if the producer = 0 and the consumer = 1, a value of 0 in the ownership bit indicates that the producer owns the descriptor 80. Other bits of the 1 byte of the metadata 82 can indicate the size of the payload 84 and/or can provide other information.

According to various embodiments, both the producer and the consumer poll for (as well as set) the descriptor ownership at certain stages of the communication protocol. The polling process may involve the producer or consumer repeatedly checking (such as by reading) the ownership bit in the metadata 82 of the descriptor 80, or other polling in which a particular entity (such as a CPU) repeatedly checks for a value, state, event etc. at time intervals. The polling process of various embodiments may be performed according to the following sequence: (1) flushing a CPU cache line that corresponds to the descriptor address (unit) in the disaggregated memory 45, (2) reading the value of the ownership bit in the descriptor address, and (3) if the value of the ownership bit is not equal to the desired value (e.g., the consumer reads the ownership bit and identifies a value of 0 corresponding to the producer, rather than a value of 1 corresponding to the consumer), then the polling process is repeated starting at (1) where the CPU cache line is flushed again and then the ownership bit is read again at (2). Flushing a cache may involve clearing a cache by removing the data contained in a cache, or otherwise clearing a portion (such as one or more cache lines) of a cache so that the cache line(s) that contained such data can be used for other data. Flushing the CPU cache line ensures that stale data is removed from the CPU cache line, in anticipation that new data is going to be written into the descriptor address (unit) in the disaggregated memory 45.

According to various embodiments, the producer and the consumer write descriptors using non-temporal 64-byte writes, which are writes that bypass the CPU caches and go directly to the disaggregated memory 45 in one operation. For example, a CPU may write the metadata 82 and the payload 84 of the descriptor 80 from a buffer to the disaggregated memory 45, without performing any caching or modification of cached data (if any) of the descriptor 80. This may be an atomic operation in that either all of the 64-byte content (e.g., both the metadata 82 and the payload 84) in a descriptor 80 is changed (written) as a single unit (e.g., all the bytes of the descriptor 80 are written together their entirety in a single write operation, rather than in parts, such as by separately writing portions of the metadata 82 or payload 84 in multiple write operations), or none of it is changed. The atomic nature of the writing, rather than partial writing, helps to ensure that the data in the descriptor 80 is valid/current and corresponds to the size of a CPU cache line. Also, if the writer (e.g., the producer or the consumer, depending on the context) previously had data in its CPU cache line, this data is removed from the cache line via flushing (as explained above). Non-temporal 64-byte writes are supported by modern processors, such as x86 processors and the like.

When data is to be transmitted from the producer to the consumer, the descriptor 80 is written so that the data is written into a particular unit in the first ring 68 and then copied from that unit in the first ring 68 to a corresponding unit in the shared ring 70, and then from that unit in the shared ring 70 to a corresponding unit in the second ring 72. If a payload larger than 63 bytes needs to be transmitted from the producer to the consumer, then various options are available. One possibility is for the producer to write 63 bytes into the appropriate unit of the shared ring 70 and write the excess amount of the data into a some other (different) unit in the shared ring 70, and provide address offset information to the consumer. Another possibility is for the producer to write the entire data or the excess data into a different location in the disaggregated memory 45, which may be outside of the shared ring 70, and provide address offset information to the consumer, for example by writing the address of such location into an appropriate unit in the shared ring 70. These and other operations associated with communication of data between a producer and a consumer, via a disaggregated memory, will be described in detail next below.

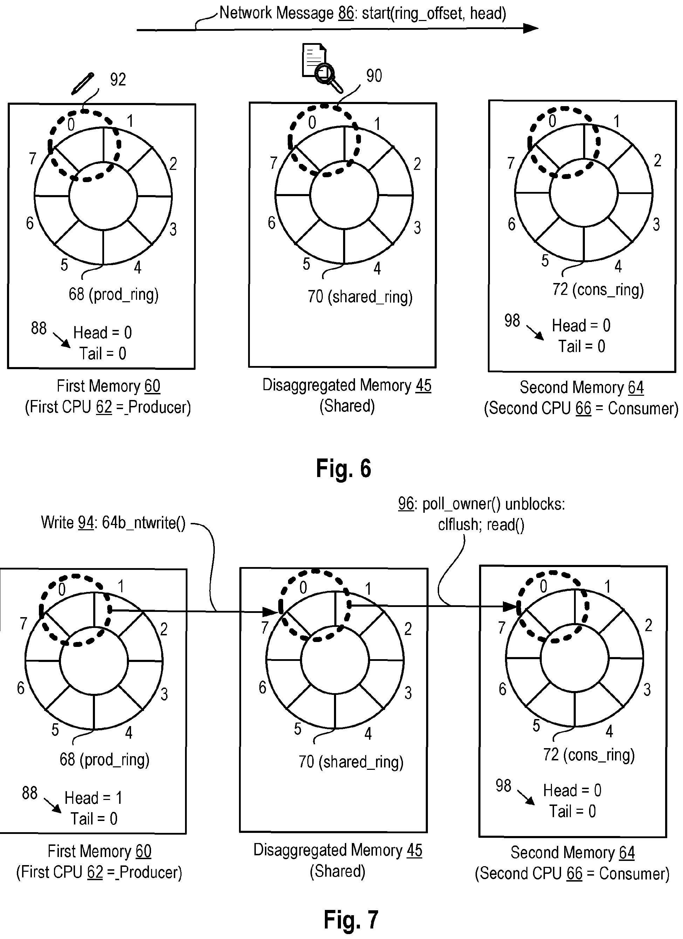

Figs. 6-9 are sequential functional block diagrams depicting a communication protocol between computers using a disaggregated memory according to embodiments. More specifically, the communication protocol may be a single-producer single-consumer communication protocol between the two CPUs 62 and 66 of Fig. 4 via the disaggregated memory 45.

Referring first to Fig. 6, the producer (e.g., the first CPU 62) sends a network message 86 to the consumer to inform the consumer that the producer intends to start writing to the disaggregated memory 45. The network message 86 of various embodiments may be an out-of-band message sent over the network 16 and may be infrequent in that network messages are sent only when an entity intends to write to the disaggregated memory 45. An example network message 86 may have a format/content of start(ring_offset, head), wherein the ring_offset is the offset within a memory region where the ring 70 is allocated in the disaggregated memory 45, and the head is the initial head index (pointer) in the ring 70 where the producer will write the payload 84.

In the example of Fig. 6, pointers 88 for the first ring 68 (prod_ring) include a head pointer at unit 0 (and also a tail pointer at unit 0), which identify the unit location of the first ring 68 (and also the corresponding same unit location in the shared ring 70) where the producer will write the descriptor 80. Hence, head = 0 in the network message 86 sent to the consumer indicates that the producer will write the descriptor 80 at unit 0 of the rings. Upon receiving the network message 86, the consumer begins polling (e.g., reading) at unit 0 at the shared ring 70 to determine if the consumer has ownership of the descriptor 80, using the polling process (including a cache flush) previously described above. This polling is graphically represented at 90 in Fig. 6. At this time, because the producer has not yet performed a write of the descriptor 80 to the disaggregated memory 45, the consumer will not identity its ownership of the descriptor 80 (e.g., the ownership value is at 0, and not at 1).

When the producer begins to write to the descriptor 80 (at unit 0 at the pointer head of the first ring 68), as represented graphically at 92 in Fig. 6, the producer first modifies the prod_ring[head] of the first ring 68 by writing the content of the payload 84 into unit 0 of the first ring 68 and setting the ownership bit from ownership = 0 to ownership = 1 (so that the consumer, as an owner, can later act on the descriptor 80 to read, copy, modify, etc. the payload 84.

Referring next to Fig. 7, the producer then performs an atomic write 94, from unit 0 of the first ring 68 to unit 0 of the shared ring 70. According to various embodiments and as previously explained above, such a write 94 may be a 64-byte non-temporal write (64b_ntwrite()) based on load-store CPU instruction(s) for example. The producer then increments the head pointer from head = 0 to head = 1 for the first ring 68.

Upon completion of the write 94 into unit 0 of the disaggregated memory 45, the polling (and cache flushing) performed by the consumer can stop, since the ownership value = 1 has been detected and the consumer has become the owner of the descriptor 80. The consumer unblocks its cache, and copies the payload 84 from unit 0 of the shared ring 70 to unit 0 of the second ring 72 (cons_ring), for example copies shared _ring[head] to cons_ring[head]. The consumer can then access the payload 84 in cons_ring[head] at unit 0 of the second ring 72. These operations are all collectively shown at 96 in Fig. 7. The descriptor 80 copied into cons_ring[head] is guaranteed to have valid data, because the 64-byte cache line was transmitted by the write 94 as a single unit, and so if the ownership bit (in the metadata 82) is equal to that of the consumer, then the payload 84 must also be valid.

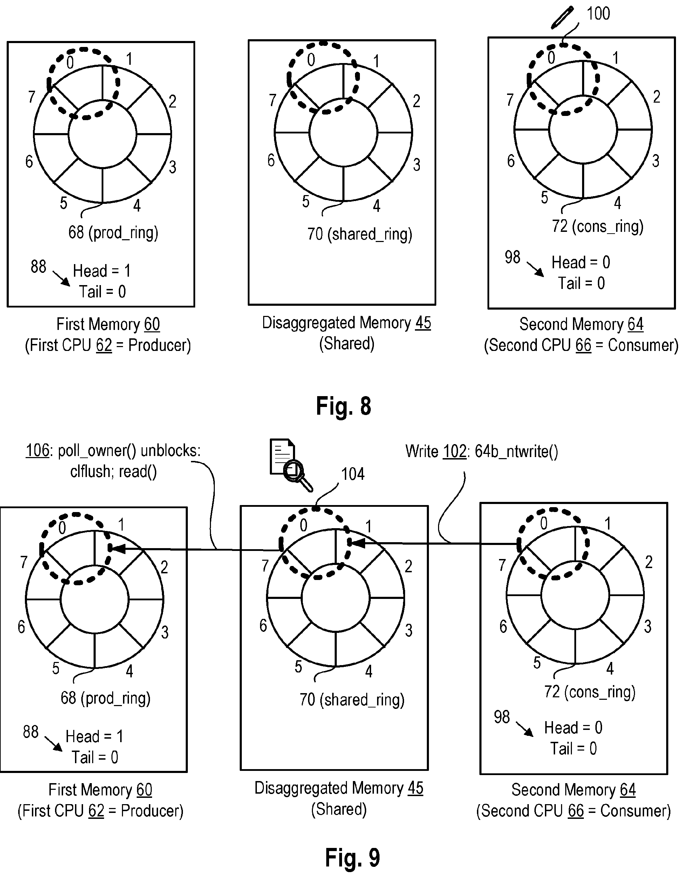

Referring next to Fig. 8, the consumer can then act on the content of the payload 84 that has been copied into unit 0 of the second ring 72. For example, the consumer can write (as represented graphically at 100) a reply that is to be sent to the producer, such as by modifying the content of the payload 84 at cons_ring[head] and changing the ownership from ownership = 1 to ownership = 0 in the metadata 82 at cons_ring[head].

Referring next to Fig. 9, the consumer then performs an atomic write 102 (such as a 64-byte non-temporal write), from unit 0 of the second ring 72 to unit 0 of the shared ring 70. For example, the consumer may use cons_ring[head] at the second ring 72 as the source of the write 102. For pointers 98 for the second ring 72, the consumer then increments the head pointer from head = 0 to head = 1, and also increments the tail pointer from tail = 0 to tail =1. The consumer may begin polling for ownership at the new head pointer (head = 1).

With regards to the producer, the producer in some embodiments continues to poll for ownership since the beginning, when the original network message 86 (indicating its intent to write to the shared ring 70) was sent in Fig. 6. Such polling can involve the polling process of checking for ownership value = 0, flushing a cache line, etc., as previously explained above. Upon completion of the write 102 into unit 0 of the disaggregated memory 45, the polling (and cache flushing) performed by the producer can stop, since the ownership value = 0 has been detected and the producer has become the owner of the descriptor 80. The producer unblocks its cache, and copies the payload 84 from unit 0 of the shared ring 70 to unit 0 of the first ring 68 (prod_ring), for example copies shared_ring[head] to prod_ring[head]. The producer can then access the payload 84 in prod_ring[head] at unit 0 of the first ring 68 as needed. These operations are all collectively shown at 106 in Fig. 7.

Polling by the producer in Fig. 9 can be initiated in various ways. As previously described above for some embodiments, polling may be initiated when the producer originally sent the network message 86 (in Fig. 6) and continues until the producer detects its ownership value in the reply (provided by the write 102 in Fig. 8) from the consumer. In other embodiments, the consumer can send a network message to the producer, when the consumer intends to write a reply that will be copied to the shared ring 70-this network message may then be used to trigger the producer into performing the polling process. Other techniques for initiating the polling process by the producer and/or consumer may be used.

Eventually, the producer does not have any more data to send. When this happens, the producer of some embodiments may send an end message via the network 16, which is delivered to the consumer. Upon receiving such an end message, the consumer is informed that it can exit its loop for polling for ownership. A similar technique can be performed in some embodiments of the consumer, so that the producer can also exit its polling loop if needed.

While out-of-band network messages have been described herein for the less-frequent messaging that may be used, other out-of-band techniques can be used to communicate intents to write to the disaggregated memory 45. For example, interrupts may be sent using the hardware of the disaggregated memory 45.

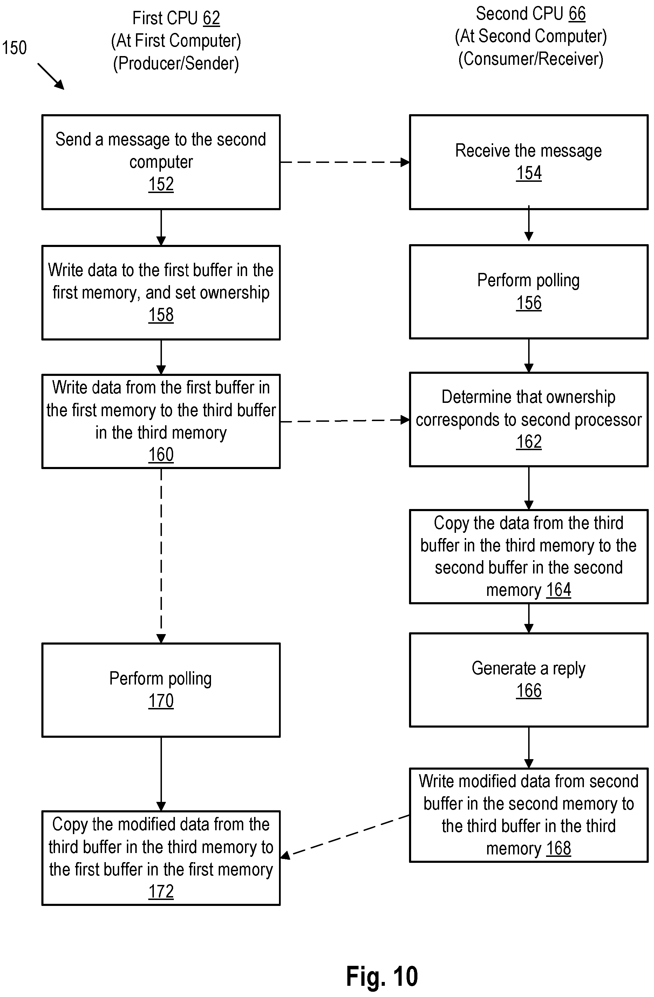

Fig. 10 is a flow diagram depicting a method 150 of communication between computers using disaggregated memory according to embodiments. Specifically, the method 150 can be performed in the computing system 100 of Fig. 1, in which computers 10 (e.g., the first CPU 62 and the second CPU 66) communicate with each other using the disaggregated memory 45. The example method 150 may include one or more operations, functions, or actions illustrated by one or more blocks, which represent steps, operations, acts, etc. The various blocks of the method 150 and/or of any other process(es) described herein may be combined into fewer blocks, divided into additional blocks, supplemented with further blocks, and/or eliminated based upon the desired implementation. In one embodiment, the operations of the method 150 may be performed in a pipelined sequential manner. In other embodiments, some operations may be performed out-of-order, in parallel, etc.

The method 150 is shown and described with respect to a first computer having a first processor (first CPU 62, which is the producer) and a first memory (first memory 60) having a first buffer (first ring 68), and with respect to a second computer having a second processor (second CPU 66, which is the consumer) and a second memory (second memory 64) having a second buffer (second ring 72). Furthermore, the method 150 is shown and described with respect to a third memory (disaggregated memory 45) having a third buffer (shared ring 70).

Starting at a block 152 ("Send a message to the second computer"), the first computer sends the network message 86 to the second computer to inform the second processor that the first processor will write to the third buffer in the third memory. In response to receiving the message at a block 154 (Receive the message"), the second processor starts a polling process to determine ownership, at a block 156 ("Perform polling").

At a block 158 ("Write data to the first buffer in the first memory, and set ownership"), the first processor writes the data into the payload 84 of the descriptor 80 in the first ring 68, and also sets the ownership (in the metadata 82) to ownership = 1 to correspond to the second processor (consumer). Thus, the consumer can assume ownership of the descriptor 80 and the data in its payload 84, after the first processor writes the descriptor into the shared ring 70.

At a block 160 ("Write data from the first buffer in the first memory to the third buffer in the third memory"), the first processor writes the descriptor 80 (including the data in the payload 84) from the first ring 68 in the first memory 60 to the shared ring 70 in the disaggregated memory 45. At a block 162 ("Determine that ownership corresponds to second processor"), the polling process performed by the second processor determines that the ownership of the descriptor now belongs to the second processor.

As such at a block 164 ("Copy the data from the third buffer in the third memory to the second buffer in the second memory"), the second processor can end the polling process, unblock its cache, and copy the descriptor (having the data in the payload 84) from the shared ring 70 to the second ring 72. If the second processor generates a reply at a block 166 ("Generate a reply"), such as by modifying the data in the payload, the second processor can change the ownership to ownership value = 0 to correspond to the first processor, and write the modified data from the second ring 72 to the shared ring 70, at a block 168 ("Write modified data from second buffer in the second memory to the third buffer in the third memory").

Meanwhile at a block 170 ("perform polling"), the first processor is performing polling to determine if it owns the descriptor having the modified data. Upon confirming its ownership, the first processor copies the modified data from the shared ring 70 to the first ring 68, at a block 172 ("Copy the modified data from the third buffer in the third memory to the first buffer in the first memory").

The operations described above can repeat as long as the producer/consumer have data to write to the disaggregated memory. An end message can be sent (e.g., by the producer) when there is no more data to send, thus ending the polling loop(s).

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

Although one or more embodiments have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the present disclosure. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A computing system, comprising:
a first computer that includes a first processor and a first memory having a first buffer;
a second computer that includes a second processor and a second memory having a second buffer; and
a third memory, having a third buffer, that is external to and shared by the first and second computers, wherein the first and second computers are configured to communicate with each other via the third memory, and wherein:
the first processor is configured to write data into the first buffer in the first memory and to set an ownership associated with the data to correspond to the second processor;
the first processor is configured to write the data from the first buffer in the first memory to the third buffer in the third memory; and
the second processor is configured to perform a polling process to determine the ownership of the data, and in response to the polling process having determined that the ownership corresponds to the second processor, the second processor is configured to copy the data from the third buffer in the third memory to the second buffer in the second memory.

2. The computing system of claim 1, wherein the first, second, and third buffers are configured as circular buffers having a plurality of units, and wherein each unit of the circular buffers has a size to accommodate bytes of the data and a bit value that indicates the ownership.

3. The computing system of claim 2, wherein the size of each unit of the circular buffers corresponds to a size of cache lines of the first and second processors.

4. The computing system of claim 1, wherein to perform the polling process, the second processor is configured to:
flush a cache line at the second computer that corresponds to a location in the third buffer in the third memory where the data is written;
read a bit value to determine the ownership; and
in response to determination that the ownership corresponds to the first processor, repeat the polling process including flushing the cache line and reading the bit value; and
in response to determination that the ownership corresponds to the first processor, end the polling process.

5. The computing system of claim 1, wherein to write the data from the first buffer in the first memory to the third buffer in the third memory, the first processor is configured to bypass a cache in the first computer by directly writing, as a single unit, the data and a bit value that indicates the ownership, from the first buffer in the first memory to the third buffer in the third memory.

6. The computing system of claim 1, wherein the first computer is configured to send a message to the second computer to inform the second processor that the first processor will write to the third buffer in the third memory, and wherein in response to receiving the message, the second processor is configured to start the polling process.

7. The computing system of claim 1, wherein the second processor is further configured, after copying the data to the second buffer in the second memory, to:
generate a reply by modifying the data in the second buffer in the second memory;
set an ownership associated with the modified data to correspond to the first processor; and
write the modified data from the second buffer in the second memory to the third buffer in the third memory, and
wherein the first processor is configured to perform another polling process to determine the ownership of the modified data, and in response to the another polling process having determined that the ownership of the modified data corresponds to the first processor, the first processor is configured to copy the modified data from the third buffer in the third memory to the first buffer in the first memory.

8. A method for a first computer having a first processor and a first memory to communicate with a second computer having a second processor and a second memory, the method comprising:
writing, by the first processor, data into a first buffer in the first memory and setting an ownership associated with the data to correspond to the second processor;
sending, by the first computer, a message to the second computer to inform the second processor that the first processor will write to a third buffer in a third memory, wherein the third memory is external to and shared by the first and second computers, and wherein in response to the message, the second processor starts a polling process to determine the ownership; and
writing, by the first processor, the data from the first buffer in the first memory to a third buffer in a third memory,
wherein in response to a polling process having determined that the ownership corresponds to the second processor, the second processor is configured to copy the data from the third buffer in the third memory to the second buffer in the second memory.

9. The method of claim 8, wherein writing to the third buffer in the third memory comprises writing to a circular buffer, having a plurality of units, in the third memory and wherein each unit of the circular buffer has a size to accommodate bytes of the data and a bit value that indicates the ownership.

10. The method of claim 9, wherein writing to the circular buffer in the third memory includes writing into a unit of the circular buffer that corresponds to a size of cache lines of the first and second processors.

11. The method of claim 8, wherein to perform the polling process, the second processor performs:
flushing a cache line at the second computer that corresponds to a location in the third buffer in the third memory where the data is written;
reading an ownership value to determine the ownership; and
in response to determining that the ownership corresponds to the first processor, repeating the polling process including flushing the cache line and reading the ownership value; and
in response to determining that the ownership corresponds to the first processor, ending the polling process,
and/or
wherein writing the data from the first buffer in the first memory to the third buffer in the third memory comprises:
bypassing, by the first processor, a cache in the first computer by directly writing, as a single unit, the data and a bit value that indicates the ownership, from the first buffer in the first memory to the third buffer in the third memory,
and/or
wherein the second processor generates a reply by modifying the data in the second buffer in the second memory and writes the modified data from the second buffer in the second memory to the third buffer in the third memory, and wherein the method further comprises:
performing, by the first processor, another polling process to determine ownership of the modified data;
in response to the another polling process having determined that the ownership of the modified data corresponds to the first processor, copying the modified data from the third buffer in the third memory to the first buffer in the first memory.

12. The method of claim 8, further comprising:
sending, by the first computer to the second computer, another message to inform the second processor that the first processor is finished writing to the third buffer in the third memory, and wherein the second processor ends the polling process in response to the another message.

13. The method of claim 8, wherein sending the message to the second computer comprises sending the message via a network different from a connection link used to write the data from the first buffer in the first memory to the third buffer in the third memory.

14. In a computing system that includes a first computer having a first processor and a first memory and a second computer having a second processor and a second memory, a method for the second computer to communicate with the first computer, the method comprising:
receiving, by the second computer from the first computer, a message to inform the second processor that the first processor will write data to a third buffer in a third memory, wherein the third memory is external to and shared by the first and second computers;
in response to the message, performing, by the second processor, a polling process to determine ownership of the data;
in response to the polling process having determined that the ownership corresponds to the second processor, copying, by the second processor, the data from the third buffer in the third memory to the second buffer in the second memory; and
generating, by the second processor, a reply by modifying the data in the second buffer in the second memory and writing the modified data from the second buffer in the second memory to the third buffer in the third memory,
wherein the first processor performs another polling process to determine ownership of the modified data, and wherein in response to the another polling process having determined that the ownership of the modified data corresponds to the first processor, the first processor copies the modified data from the third buffer in the third memory to the first buffer in the first memory.

15. The method of claim 14, wherein performing the polling process comprises:
flushing, by the second processor, a cache line at the second computer that corresponds to a location in the third buffer in the third memory where the data is written;
reading, by the second processor, a bit value to determine the ownership; and
in response to determining that the ownership corresponds to the first processor, repeating, by the second processor, the polling process including flushing the cache line and reading the bit value; and
in response to determining that the ownership corresponds to the first processor, ending, by the second processor, the polling process,
and/or
wherein receiving the message comprises receiving the message, by the second processor, as an interrupt from hardware of the third memory,
and/or
wherein writing the modified data from the second buffer in the second memory to the third buffer in the third memory comprises:
bypassing, by the second processor, a cache in the second computer by directly writing, as a single unit, the modified data and a bit value that indicates the ownership of the modified data, from the second buffer in the second memory to the third buffer in the third memory,
and/or
wherein the method further comprises:
receiving, by the second computer from the first computer, another message to inform the second processor that the first processor is finished writing to the third buffer in the third memory; and
ending, by the second processor, the polling process in response to the another message.
